# EUROPÄISCHE PATENTSCHRIFT

(11) **EP 2 149 482 B1**
(45) Veröffentlichungstag und Bekanntmachung des Hinweises auf die Patenterteilung: **23.11.2011**
(21) Anmeldenummer: 09006426.2
(22) Anmeldetag: 13.05.2009
(51) Int. Cl.: B60R 25/04

(54) **Antidiebstahlsystem für Kraftfahrzeuge**
Anti theft system for motor vehicles
Système antivol pour véhicule automobile

(30) Priorität: 02.08.2008 DE 102008036172
(43) Veröffentlichungstag der Anmeldung: 03.02.2010
(73) Patentinhaber: Dr. Ing. h.c. F. Porsche AG, 70435 Stuttgart (DE)
(72) Erfinder: Wanzeck, Michael, 76877 Offenbach/Queich (DE); Giebelhäuser, Daniel, 89195 Staig (DE)

(56) Entgegenhaltungen:
- DE-A1- 19 520 472
- US-A- 6 166 627
- US-A1- 2005 038 598
- US-A1- 2006 085 127
- US-B1- 6 211 818

## Beschreibung

Die Erfindung betrifft ein Kraftfahrzeug nach dem Oberbegriff des Patentanspruchs 1.

Aus der Praxis sind bereits Kraftfahrzeuge mit einem kraftfahrzeuginternen Vehicle Tracking System bekannt, wobei Vehicle Tracking Systeme auch als VTS-Systeme bezeichnet werden. Ein kraftfahrzeuginternes VTS-System eines Kraftfahrzeugs verfügt über ein Steuergerät, welches nur dann ein Starten des Kraftfahrzeugs zulässt, wenn einerseits ein dem Kraftfahrzeug eineindeutig zugeordneter, elektronischer Kraftfahrzeugschlüssel verwendet wird, und wenn andererseits eine dem Kraftfahrzeug eineindeutig zugeordnete, elektronische Fahrerkarte vom Fahrer mitgeführt wird. Die Fahrerkarte wird auch als Driver Card bezeichnet. Dann, wenn das kraftfahrzeuginterne VTS-System ein Starten des Kraftfahrzeugs zulässt oder nicht, kann dasselbe an ein kraftfahrzeugexternes VTS-System ein Signal übermitteln, welches Daten über das Kraftfahrzeug enthält, so z. B. eine dem Kraftfahrzeug zugeordnete, eineindeutige Kraftfahrzeugidentifikationsnummer sowie eine mit Hilfe eines kraftfahrzeuginternen GPS-Systems übermittelte Kraftfahrzeugposition.

Mit einem solchen VTS-System kann gewährleistet werden, dass ein Kraftfahrzeug nur dann gestartet wird, wenn einerseits der dem Kraftfahrzeug eineindeutig zugeordnete Kraftfahrzeugschlüssel verwendet wird, und wenn andererseits die dem Kraftfahrzeug eineindeutig zugeordnete Fahrerkarte vom Fahrer mitgeführt wird. Versicherungen verlangen jedoch von Kunden, dass dieselben die Fahrerkarte beim Verlassen des Kraftfahrzeugs nicht im Kraftfahrzeug belassen. Belässt ein Kunde die Fahrerkarte nach dem Verlassen des Kraftfahrzeugs in demselben, so kann die Versicherung im Falle eines Diebstahls die Schadensregulierung ablehnen. Für Versicherungen ist es jedoch schwierig zu überprüfen, ob eine im Diebstahlsfall vom Kunden vorgelegte Fahrerkarte dem kraftfahrzeuginternen VTS-System im Diebstahlsfall zugeordnet war.

Hiervon ausgehend liegt der vorliegenden Erfindung das Problem zu Grunde das System dahingehend zu verbessern, das eine eindeutige Erkennung des Nutzungeberechtigen mittels einer Systems zur Identifizierung gewährleistet ist und die Gefahr eines Missbrauchs verringert wird. Dieses Problem wird durch ein Kraftfahrzeug gemäß Patentanspruch 1 gelöst.

Erfindungsgemäß übermittelt das Steuergerät, in welchem eine eineindeutige Kraftfahrzeugidentifikationsnummer gespeichert ist oder welches die eineindeutige Kraftfahrzeugidentifikationsnummer aus einem anderen Steuergerät ausliest, die eineindeutige Kraftfahrzeugidentifikationsnummer zusammen mit einer eineindeutigen Identifikationsnummer des Steuergeräts und zusammen mit einer eineindeutigen Identifikationsnummer der Fahrerkarte, die das Steuergerät aus der Fahrerkarte ausliest, an das kraftfahrzeugexterne VTS-System zur Speicherung.

Mit der hier vorliegenden Erfindung wird erstmals vorgeschlagen, dass ein Steuergerät eines kraftfahrzeuginternen VTS-Systems die eineindeutige Kraftfahrzeugidentifikationsnummer zusammen mit der eineindeutigen Identifikationsnummer des Steuergeräts sowie der eineindeutigen Identifikationsnummer der Fahrerkarte an ein kraftfahrzeugexternes VTS-System übermittelt. Hiermit kann eine Versicherung im Diebstahlsfall stets zweifelsfrei überprüfen, ob eine Fahrerkarte, die vom Kunden im Diebstahlsfall vorgelegt wird, mit dem kraftfahrzeuginternen VTS-System des Kraftfahrzeugs zum Zeitpunkt des Diebstahls verbunden war.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:

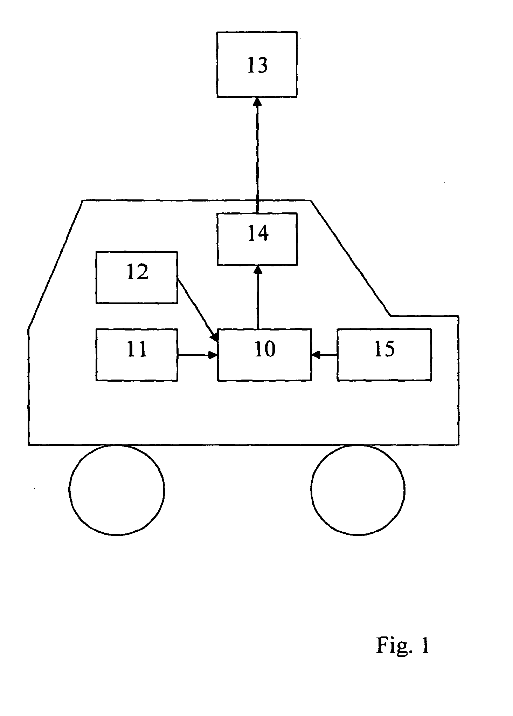

- Fig. 1: ein Blockschaltbild eines erfindungsgemäßen Kraftfahrzeugs.

Fig. 1 zeigt eine stark schematisierte Darstellung eines erfindungsgemäßen Kraftfahrzeugs mit einem kraftfahrzeuginternen VTS-System, wobei das kraftfahrzeuginterne VTS-System ein Steuergerät 10 umfasst. Das Steuergerät 10 des kraftfahrzeuginternen VTS-Systems lässt ein Starten des Kraftfahrzeugs zu, wenn einerseits ein dem Kraftfahrzeug eineindeutig zugeordneter, elektronischer Kraftfahrzeugschlüssel 11 verwendet wird, und wenn andererseits eine dem Kraftfahrzeug eineindeutig zugeordnete, elektronische Fahrerkarte 12 vom Fahrer beim Starten des Kraftfahrzeugs mitgeführt wird. Fehlt die Fahrerkarte so wird gleichzeitig ein Alarm ausgelöst.

Ohne Fahrerkarte 12 kann das Kraftfahrzeugs also gestartet werden, aber da die Identifikationsdaten an das VTS-externe-System nur bei Anmeldung bzw. Auslesen der Fahrerkarte möglich ist und diese Daten somit fehlen, erfolgt die Alarmauslösung in dem externen VTS-System.

Das kraftfahrzeuginterne VTS-System, insbesondere das Steuergerät 10 desselben, kann Daten an einen Server 13 eines kraftfahrzeugexternen VTS-Systems übertragen bzw. übermitteln, um insbesondere gestohlene Kraftfahrzeuge zu verfolgen. Die Übermittlung der Daten an das kraftfahrzeugexterne VTS-System erfolgt vorzugsweise mit Hilfe eines kraftfahrzeuginterne Telekommunikationssystems 14.

Um eine Ortung insbesondere gestohlener Kraftfahrzeuge zu ermöglichen, übermittelt das kraftfahrzeuginterne VTS-System an das kraftfahrzeugexterne VTS-System u. a. als kraftfahrzeugspezifische Daten eine Kraftfahrzeugposition des Kraftfahrzeugs, die von einem GPS-System 15 ermittelt wird.

Gemäß Fig. 1 stellt das GPS-System 15 Kraftfahrzeugkoordinaten dem Steuergerät 10 des VTS-Systems zur Verfügung, welche diese Daten mit Hilfe des kraftfahrzeuginternen Telekommunikationssystems 14 an den Server 13 des kraftfahrzeugexternen VTS-Systems überträgt.

Im Sinne der hier vorliegenden Erfindung wird vorgeschlagen, dass das Steuergerät 10 des Kraftfahrzeuginternen VTS-Systems eine eineindeutige Kraftfahrzeugidentifikationsnummer, die auch als VIN-Nummer bezeichnet wird, zusammen mit einer eineindeutigen Identifikationsnummer des Steuergeräts 10 und zusammen mit einer eineindeutigen Identifikationsnummer der Fahrerkarte 12 an das kraftfahrzeugexterne VTS-System zur Speicherung und Verwaltung übermittelt.

Die eineindeutige Kraftfahrzeugidentifikationsnummer bzw. VIN-Nummer ist entweder im Steuergerät 10 gespeichert oder wird vom Steuergerät 10 aus einem anderen Steuergerät ausgelesen. Die eineindeutige Identifikationsnummer des Steuergeräts 10 ist in demselben gespeichert. Die eineindeutige Identifikationsnummer der Fahrerkarte 12 ist in der Fahrerkarte 12 gespeichert und wird vom Steuergerät 10 des kraftfahrzeuginternen VTS-Systems ausgelesen.

Es liegt demnach im Sinne der hier vorliegenden Erfindung, dass das kraftfahrzeuginterne VTS-System die Kombination von drei eineindeutigen Identifikationsnummern, nämlich die Kombination der eineindeutigen Kraftfahrzeugidentifikationsnummer, der eineindeutigen Identifikationsnummer des Steuergeräts 10 sowie der eineindeutigen Identifikationsnummer der Fahrerkarte 12, an das kraftfahrzeugexterne VTS-System übermittelt, nämlich insbesondere bei jedem Start des Kraftfahrzeugs. Hierzu wird bei jedem Start des Kraftfahrzeugs vom Steuergerät 10 des kraftfahrzeuginternen VTS-Systems einerseits die Identifikationsnummer der Fahrerkarte 12 ausgelesen und bei jedem Start des Kraftfahrzeugs zusammen mit den anderen Identifikationsnummern an das kraftfahrzeugexterne VTS-System zur Speicherung und Verwaltung übermittelt. Hierdurch ist es dann möglich, für jeden Start des Kraftfahrzeugs nachzuverfolgen, welche Fahrerkarte beim Start des Kraftfahrzeugs mit dem VTS-System des Kraftfahrzeugs verbunden waren. Im Diebstahlsfall kann demnach eindeutig nachvollzogen werden, ob und welche Fahrerkarte zum Zeitpunkt des Diebstahls mit dem Steuergerät 10 des kraftfahrzeuginternen VTS-Systems verbunden war.

Es liegt demnach im Sinne der hier vorliegenden Erfindung, bei jedem Start des Kraftfahrzeugs die eineindeutige Identifikationsnummer der Fahrerkarte 12 zusammen mit der eineindeutigen Identifikationsnummer des Steuergeräts 10 des VTS-Systems sowie zusammen mit der eineindeutigen Kraftfahrzeugidentifikationsnummer, die auch als VIN-Nummer bezeichnet wird, an ein kraftfahrzeugexternes VTS-System zur Speicherung zu übertragen.

## Patentansprüche

1. Kraftfahrzeug, mit einem kraftfahrzeuginternen VTS-System, welches kraftfahrzeugspezifische Daten an ein kraftfahrzeugexternes VTS-System übermittelt, um insbesondere gestohlene Kraftfahrzeuge zu verfolgen, wobei das kraftfahrzeuginterne VTS-System ein Steuergerät umfasst, welches nur dann ein Starten des Kraftfahrzeugs zulässt, wenn einerseits ein dem Kraftfahrzeug **eineindeutig** zugeordneter Kraftfahrzeugschlüssel verwendet wird, **dadurch gekennzeichnet, dass** das Steuergerät (10), in welchem eine eineindeutige Kraftfahrzeugidentifikationsnummer gespeichert ist oder welches die eineindeutige Kraftfahrzeugidentifikationsnummer aus einem anderen Steuergerät ausliest, die eineindeutige Kraftfahrzeugidentifikationsnummer zusammen mit einer eineindeutigen Identifikationsnummer des Steuergeräts (10) und zusammen mit einer eineindeutigen Identifikationsnummer der Fahrerkarte (12), die das Steuergerät (10) aus einer dem Kraftfahrzeug eineindeutig zugeordneten Fahrerkarte (12) ausliest, an das kraftfahrzeugexterne VTS-System (13) zur Speicherung übermittelt.

2. Kraftfahrzeug nach Anspruch 1, **dadurch gekennzeichnet, dass** das Steuergerät die eineindeutige Identifikationsnummer der Fahrerkarte (12) bei jedem Start des Kraftfahrzeugs aus derselben ausliest.

3. Kraftfahrzeug nach Anspruch 2, **dadurch gekennzeichnet, dass** das Steuergerät (10) die eineindeutige Kraftfahrzeugidentifikationsnummer zusammen mit der eineindeutigen Identifikationsnummer des Steuergeräts und zusammen mit der eineindeutigen Identifikationsnummer der Fahrerkarte (12) bei jedem Start des Kraftfahrzeugs an das kraftfahrzeugexterne VTS-System (13) zur Speicherung übermittelt.

4. Kraftfahrzeug nach einem der Ansprüche 1 bis 3, **dadurch gekennzeichnet, dass** dasselbe ein kraftfahrzeuginternes Telekommunikationssystem (14) aufweist, über welches das Steuergerät (10) die eineindeutige Kraftfahrzeugidentifikationsnummer zusammen mit der eineindeutigen Identifikationsnummer des Steuergeräts (10) und zusammen mit der eineindeutigen Identifikationsnummer der Fahrerkarte (12) an das kraftfahrzeugexterne VTS-System zur Speicherung übermittelt.

## Claims

1. Motor vehicle having a motor-vehicle-internal VTS system, which transfers motor-vehicle-specific data to a motor-vehicle-external VTS system, in order, in particular, to track stolen motor vehicles, wherein the motor-vehicle-internal VTS system comprises a control device which permits the motor vehicle to start only if, on the one hand, a motor vehicle key which is unambiguously assigned to the motor vehicle is used, **characterized in that** the control device (10) in which an unambiguous motor vehicle identification number is stored or which reads out the unambiguous motor vehicle identification number from another control device transfers the unambiguous motor vehicle identification number, together with an unambiguous identification number of the control device (10) and together with an unambiguous identification number of the driver's card (12) which the control device (10) reads out from a driver's card (12) which is unambiguously assigned to the motor vehicle, to the motor-vehicle-external VTS system (13) for storage.

2. Motor vehicle according to Claim 1 **characterized in that** the control device reads out the unambiguous identification number of the driver's card (12) from said driver's card (12) whenever the motor vehicle starts.

3. Motor vehicle according to Claim 2, **characterized in that**, whenever the motor vehicle starts, the control device (10) transfers the unambiguous motor vehicle identification number, together with the unambiguous identification number of the control device and together with the unambiguous identification number of the driver's card (12), to the motor-vehicle-external VTS system (13) for storage.

4. Motor vehicle according to one of Claims 1 to 3, **characterized in that** said motor vehicle has a motor-vehicle-internal telecommunication system (14), by means of which the control device (10) transfers the unambiguous motor vehicle identification number, together with the unambiguous identification number of the control device (10) and together with the unambiguous identification number of the driver's card (12) to the motor-vehicle-external VTS system for storage.

## Revendications

1. Véhicule automobile, équipé d'un système VTS placé à l'intérieur du véhicule automobile, qui transmet les données spécifiques au véhicule automobile à un système VTS externe au véhicule automobile, pour pourchasser notamment les véhicules automobiles volés, le système VTS placé à l'intérieur du véhicule automobile comprenant un appareil de commande n'autorisant un démarrage du véhicule automobile que lorsque c'est une clé de véhicule automobile associée de façon univoque au véhicule automobile qui est utilisée, **caractérisé en ce que** l'appareil de commande (10), dans lequel un numéro d'identification de véhicule automobile univoque est mémorisé ou qui lit le numéro d'identification de véhicule automobile univoque à partir d'un autre appareil de commande, transmet, à des fins de mémorisation, au système VTS (13) externe au véhicule automobile le numéro d'identification de véhicule automobile univoque conjointement avec un numéro d'identification univoque de l'appareil de commande (10) et conjointement avec un numéro d'identification univoque de la carte du conducteur (12) qui lit les données contenues dans l'appareil de commande (10) à partir d'une carte du conducteur (12) associée de façon univoque au véhicule automobile.

2. Véhicule automobile selon la revendication 1, **caractérisé en ce que** l'appareil de commande lit le numéro d'identification univoque de la carte du conducteur (12) à chaque démarrage du véhicule automobile à partir de celle-ci.

3. Véhicule automobile selon la revendication 2, **caractérisé en ce que** l'appareil de commande (10) transmet, à des fins de mémorisation, au système VTS (13) externe au véhicule automobile le numéro d'identification de véhicule automobile univoque conjointement avec le numéro d'identification univoque de l'appareil de commande et conjointement avec le numéro d'identification univoque de la carte du conducteur (12) à chaque démarrage du véhicule automobile.

4. Véhicule automobile selon l'une quelconque des revendications 1 à 3, **caractérisé en ce qu'**il comporte un système de télécommunication (14) placé à l'intérieur du véhicule automobile via lequel l'appareil de commande (10) transmet, à des fins de mémorisation, au système VTS externe au véhicule automobile le numéro d'identification de véhicule automobile univoque conjointement avec le numéro d'identification univoque de l'appareil de commande (10) et conjointement avec le numéro d'identification univoque de la carte du conducteur (12).
